(19) **Europäisches Patentamt**
**European Patent Office**
**Office européen des brevets**

(11) **EP 3 538 318 B1**

(12) **EUROPEAN PATENT SPECIFICATION**

(45) Date of publication and mention
of the grant of the patent:
**03.01.2024   Bulletin 2024/01**

(21) Application number: **16921117.4**

(22) Date of filing: **08.11.2016**

(51) International Patent Classification (IPC):
**B24B 29/00** *(2006.01)*      **B24B 27/00** *(2006.01)*
**B24B 51/00** *(2006.01)*

(52) Cooperative Patent Classification (CPC):
**B24B 27/0038; B24B 29/00; B24B 51/00;**
**B25J 9/1679; B25J 11/0065; G05B 2219/45096;**
**G05B 2219/49277**

(86) International application number:
**PCT/CN2016/105056**

(87) International publication number:
**WO 2018/085985 (17.05.2018 Gazette 2018/20)**

(54) **METHOD OF POLISHING A WORK PIECE AND SYSTEM THEREFOR**

VERFAHREN ZUM POLIEREN VON WERKSTÜCKEN UND VORRICHTUNG DAFÜR

PROCÉDÉ DE POLISSAGE D'UNE PIÈCE ET SYSTÈME POUR EXÉCUTER LEDIT PROCÉDÉ

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**18.09.2019   Bulletin 2019/38**

(73) Proprietor: **ABB Schweiz AG**
**5400 Baden (CH)**

(72) Inventors:
• **MAO, Lei**
**Shanghai 201318 (CN)**
• **CHENG, Shaojie**
**Shanghai 201601 (CN)**

• **TAN, Jiajing**
**Shanghai 200072 (CN)**

(74) Representative: **Zimmermann & Partner**
**Patentanwälte mbB**
**Postfach 330 920**
**80069 München (DE)**

(56) References cited:
WO-A1-2015/151325          WO-A1-2015/151325
CN-A- 1 984 750            CN-A- 102 019 572
CN-A- 102 248 461          CN-A- 103 128 645
CN-A- 104 493 665          CN-A- 104 907 894
CN-A- 104 907 894          DE-A1-102010 003 697
JP-A- 2013 166 202         JP-B2- 5 970 955

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The invention relates to method and system for polishing a work piece, and more particularly to polishing adjacent surfaces of the work piece.

### Background Art

To polish surfaces on work piece, different processing methods are known, especially. To the work piece, a tool is introduced with a polishing area, which occurs with the surface of the work piece engages and removes this material. When polishing, the polishing area of the tool may be a rotatory, which is available with suitable abrasives such as grindstone, nylon wheel and abrasive cloth. It may be a non-rotating component, for example, sand belt and sand paper.

The polishing area of the tool is passed along to the desired contour of the work piece to be drawn on the work piece. The contour is the contour of the work piece in a plane containing the contact point or contact area of the tool and work piece.

When driving the polishing tool along the desired contour, the work piece polishing marks arise, which have substantially the shape of a band. These feed grooves may affect the uses of the work piece and are therefore undesirable.

Polishing methods which are intended to prevent the formation of polishing marks are known from the prior art.

Prior art document WO 2015/151325A1 relates to a surface-treated metal plate, a storage using the metal plate, and a surface processing method for the metal plate. A metal plate is used for the panel which comprises the front surface and side surface of a storage provided in a kitchen or the like. The front and side surfaces of the storage are easily noticeable by the user, and high aesthetics and design are required. Therefore, the metal plate used there may be subjected to surface processing. As a surface processing method of a metal plate, for example, stainless steel plate that is a metal plate is pressed against a stainless steel plate while rotating the polishing grindstone, and the stainless steel plate is moved relative to the polishing grindstone, thereby forming a stainless steel plate.

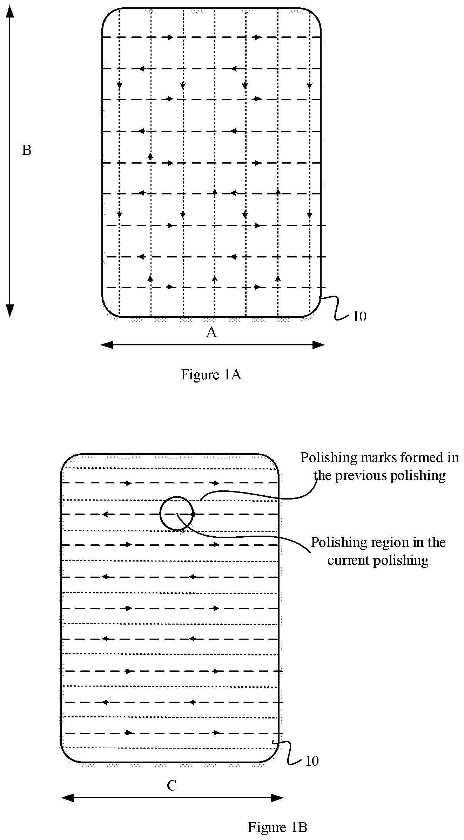

Figure 1A shows a polishing path according to conventional technology. As shown in figure 1A, a straight polishing path is guided repetitively in a linear reciprocating movement in a first direction A (in the dash line) until the whole area of the work piece 10 is processed. In order to reduce the polishing marks, another straight polishing path is guided repetitively in a linear reciprocating movement in a second direction B (in the dot line) normal to the first covering the whole area of the work piece 10. One problem encountered in this method is the polishing path in the second direction B may still leave polishing marks PM (shown by dash-line) to the end of the polishing process.

Figure 1B shows another polishing path according to conventional technology. As shown in figure 1B, a straight polishing path is guided repetitively in a linear movement in a direction C (in the dash line) until the whole area of the work piece 10 is processed. The polishing regions partially overlap with each other in the succession of two polishing paths so as to eliminate the polishing marks (in the dot line). However, this method requires a separate polishing path for eliminating the polishing marks left from the previous.

### Brief Summary of the Invention

The invention provides a method of polishing a work piece according to claim 1.

The invention provides also a system for polishing a work piece according to claim 6. Preferred embodiments of the invention are subject to the dependent claims.

By having the combination of the first polishing path component and the second polishing path component and appropriate selection of the size of the polishing area of the tool, the polishing marks may be eliminated without initiating a subsequent polishing path for removal of the polishing edges formed previously. This is helpful for increasing the polishing quality because the tool keeps in contact with the work piece reducing errors that may be introduced by the disengagement of the tool and resumption of the engagement from a new start point. Besides, because the integration of the processes for polishing and polishing mark removal, the operation efficiency of the robot system may be improved. Preferably the tool or the work piece may be maintained.

Preferably, the polishing path is in a saw-tooth or sinusoidal pattern.

Preferably, for the oscillation in one of the cycles, the polishing region on the work piece surface where the engagement occurs at start of the oscillation in the first direction intersects that where the engagement occurs at end of the oscillation in the second direction. For the oscillation in one of the cycles, the polishing region on the work piece surface where the engagement occurs at start of the oscillation in the first direction intersects that where the engagement occurs at end of the oscillation in the second direction. Because the removal rate is directly proportional to the engagement depth between the tool and the associated portion of the work piece, the polishing edge formed in the previous half-cycle may be eliminated by the polishing engagement in the present half-cycle, while the polishing edge formed in the present duration will not appear significantly. Besides, the polishing edge as formed in the present half-cycle will be removed in the upcoming half-cycle because the polishing path exhibits a cyclic feature. As an alternative, the skilled person should understand that the first embodiment is applicable to the scenario where the distance between the points is above two times of the radius of the polishing area in, for example, a round shape. With the increase of the distance between the points, the overlapping area between the contact regions for the previous half-cycle and the present will be decreasing, resulting in a part of the polishing edge to be re-polished in the present duration and thus to be eliminated.

Preferably, the polishing area of the tool rotates around an axis substantially normal to the work piece surface.

**Brief Description of the Drawings**

The subject matter of the invention will be explained in more detail in the following text with reference to preferred exemplary embodiments which are illustrated in the drawings, in which:

Figure 1A shows a polishing path according to conventional technology;

Figure 1B shows another polishing path according to conventional technology;

Figures 2 shows a robot system according to the first embodiment of present invention;

Figure 3 shows a polishing path formed on a work piece according to the first embodiment of present invention;

Figure 4 shows a zooming in view of the polishing path in a round trip defined by the first direction and the second direction according to the first embodiment;

Figure 5 shows the polishing path according to the second embodiment of present invention;

Figure 6 shows a polishing path according to a third embodiment of present invention; and

Figure 7 shows the polishing path according to the fourth embodiment of present invention.

The reference symbols used in the drawings, and their meanings, are listed in summary form in the list of reference symbols. In principle, identical parts are provided with the same reference symbols in the figures.

**Preferred Embodiments of the Invention**

In the following description, for purposes of explanation and not limitation, specific details are set forth, such as particular circuits, circuit components, interfaces, techniques, etc. in order to provide a thorough understanding of the present invention. However, it will be apparent to one skilled in the art that the present invention may be practiced in other embodiments that depart from these specific details. In other instances, detailed descriptions of well-known methods and programming procedures, devices, and circuits are omitted so not to obscure the description of the present invention with unnecessary detail.

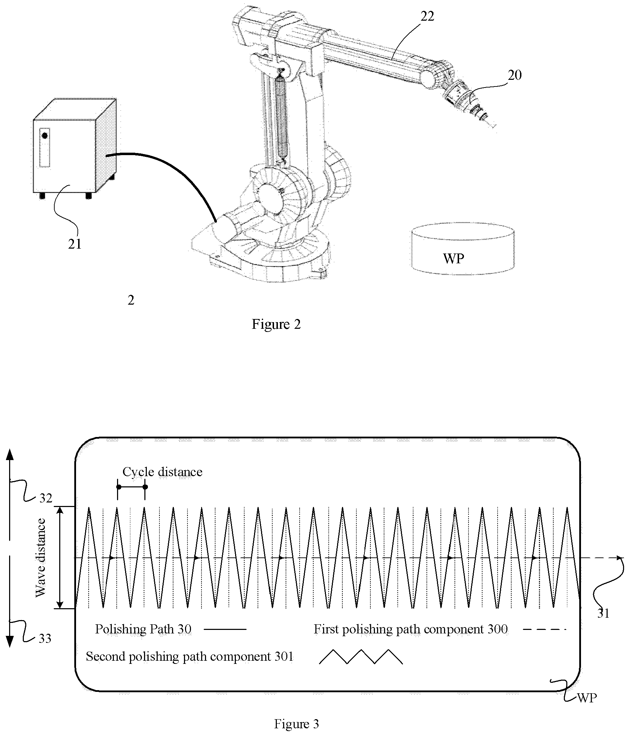

Figures 2 shows a robot system according to the first embodiment of present invention. As shown in figure 2, the robot system 2 includes a tool 20 with a polishing area, a controller 21, and a manipulator 22 holding the tool 20. Under the control of the controller 21, the manipulator 22 is operable to effecting a relative movement between polishing area of the tool 20 and a work piece WP with engaging the polishing area of the tool 20 with a portion of the work piece surface WP so as to form the polishing path on the work piece surface. The tool 20 may be held by a robot and moved relative to the work piece WP to produce the polishing path in the work piece WP. In the first embodiment, the tool 20 may be rotated in a direction about an axis and its polishing area may be in a shape of circle.

Figure 3 shows a polishing path formed on a work piece according to the first embodiment of present invention. As shown in figure 3, line 30 represents the polishing path formed on the work piece WP according to the first embodiment of present invention, along which the center of the round-shaped polishing area of the tool 20 may be guided by the manipulator 22 assuming various postures with the work piece WP maintained. The skilled person should understand that in order to achieve the relative movement between the tool 20 and the work piece WP, the manipulator may cause the work piece to move with a stationary tool 20. When driving the polishing tool 20 along the desired polishing path, the work piece polishing marks arise, which have substantially the shape of a band, due to the polishing edge of the polishing area of the tool 20.

In order to eliminate the polishing mark, the relative movement includes a first relative movement component and a second relative movement component. Accordingly, the polishing path 30 (in the solid line) may be analyzed into a first polishing path component 300 (in the dash line) and a second polishing path component 301. In the first embodiment, the first relative movement component is in rectilinear pattern causing the first polishing path component 300 to appear in rectilinear pattern in the direction indicated by arrow 31, as well. The polishing area of the tool 20 may also be oscillated during the relative movement, thus introducing the second relative movement component. The oscillating movement occurs according to the invention in a first direction and a second direction opposite to each other, as indicated by arrows 32, 33. The direction of either of the arrows 32 and 33 is substantially normal to the direction of the arrow 31. As a result, by having the second relative movement component, the polishing area of the tool 20 and the work piece WP is oscillated toward and away from each other about the first relative movement component in a first and second opposite directions 32, 33 substantially normal to a direction of the first relative movement component 31.

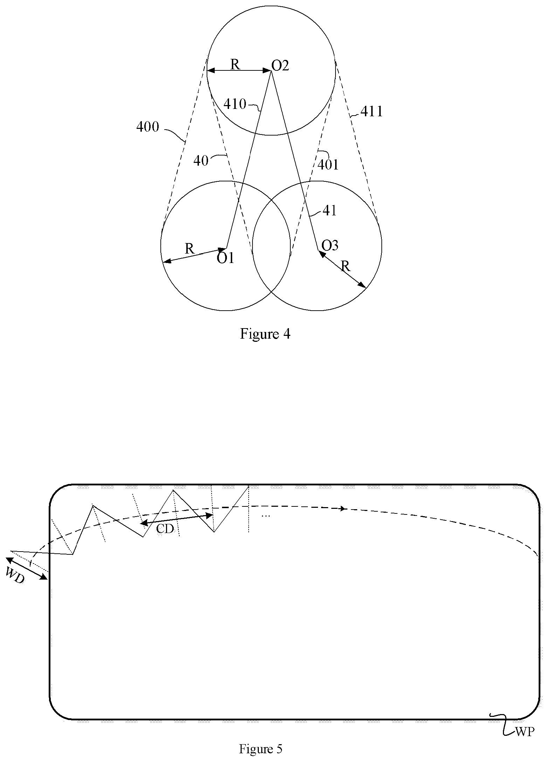

Figure 4 shows a zooming in view of the polishing path in a round trip defined by the first direction and the second direction according to the first embodiment. As shown in figure 4, line 40 represents the polishing path along with the center of the polishing area of the tool 20 may be guided during the oscillation in the first direction, where the center of the polishing area starts from O1 to O2. Similarly, line 41 represents the polishing path along with the center of the polishing area of the tool 20 may be guided during the oscillation in the second direction, where the center of the polishing area starts from O2 to O3. During the oscillation in the first direction, due to the round-shaped polishing area with radius of R, two polishing edges 400, 401 are formed to opposite sides of the polishing path 41. Subsequently, during the oscillation in the second direction, in order to remove the polishing edge 401 as previously formed by the engagement the polishing area of the tool 20 and its associated portion of the work piece WP defined between the newly generated polishing edges 410, 411, the distance between the points O1 and O3 is equal to or less than two times of the radius Rofthe polishing area. Therefore, for the oscillation in one of the cycles, the polishing region on the work piece surface where the engagement occurs at start of the oscillation in the first direction intersects that where the engagement occurs at end of the oscillation in the second direction. Because the removal rate is directly proportional to the engagement depth between the tool 20 and the associated portion of the work piece WP, the polishing edge 401 formed in the previous duration may be eliminated by the polishing engagement in the present duration, while the polishing edge 401 formed in the present duration will not appear significantly. Besides, the polishing edge 411 as formed in the present duration will be removed in the upcoming duration because the polishing path 30 as shown in figure 3 exhibits a cyclic feature. As an alternative, the skilled person should understand that the first embodiment is applicable to the scenario where the distance between the points O1 and O3 is above two times of the radius R of the polishing area. With the increase of the distance between the points O1 and O3, the overlapping area between the contact regions for the previous duration and the present duration will be decreasing, resulting in a part of the polishing edge 401 to be re-polished in the present duration and thus to be eliminated. As a result, a polishing mark formed by the engagement of the polishing area of the tool and the work piece during the oscillation in the first direction is polished by their engagement in the oscillation in the second direction.

By having the combination of the first polishing path component and the second polishing path component and appropriate selection of the size of the polishing area of the tool, the polishing marks may be eliminated without initiating a subsequent polishing path for removal of the polishing edges formed previously. This is helpful for increasing the polishing quality because the tool keeps in contact with the work piece reducing errors that may be introduced by the disengagement of the tool and resumption of the engagement from a new start point. Besides, because the integration of the processes for polishing and polishing mark removal, the operation efficiency of the robot system may be improved.

The polishing path according to the first embodiment may be generated from the algorithm hereafter. The controller 21 is adapted for receiving parameters, including cycle distance (CD) and wave distance (WD) as shown in figure 3. The controller 21 is further adapted for performing calculation as blow:

• Split the first polishing path component by CD;
• In single wave cycle, use distance(x, from 0 to CD) on the first polishing path component as independent variable, and the new wave path position(y) as dependent variable, then the wave path can be generated by equations(which is related with specific pattern). Oscillation pattern may be generated according to equation (1).

$$y = \begin{cases} -\dfrac{2*WD}{CD} \ x \ + \dfrac{WD}{2} & (0 \leq x < \dfrac{CD}{2}) \\ \dfrac{2*WD}{CD} \ x \ - \dfrac{3*WD}{2} & (\dfrac{CD}{2} \leq x < CD) \end{cases} \tag{1}$$

A polishing path according to a second embodiment of present invention may be generated by changing the first polishing path component in the first embodiment from rectilinear to sinusoidal pattern. Figure 5 shows the polishing path according to the second embodiment of present invention.

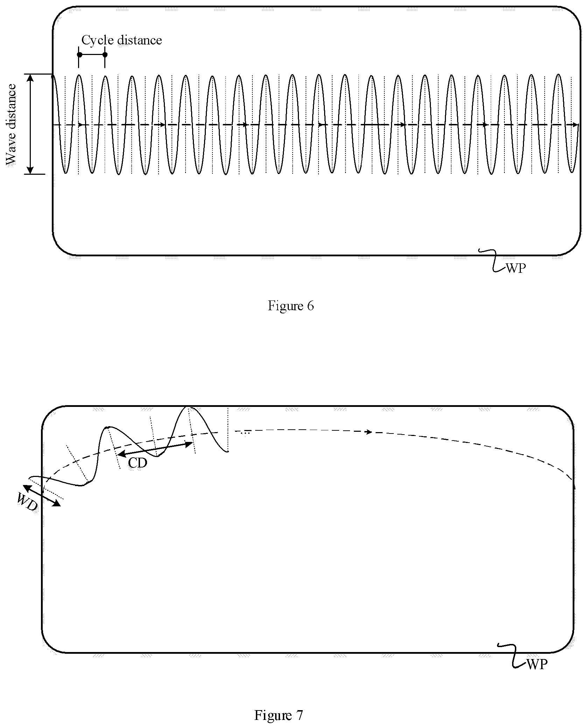

Figure 6 shows a polishing path according to a third embodiment of present invention. The controller 21 is adapted for receiving parameters, including cycle distance (CD) and wave distance (WD) as shown in figure 6. The controller 21 is further adapted for performing calculation as blow:

- Split the first polishing path component by CD;
- In single wave cycle, use distance(x, from 0 to CD) on the first polishing path component as independent variable, and the new wave path position(y) as dependent variable (note that the y value actually is based on the normal directions of points on first polishing path component path, it's not normal Cartesian coordinates), then the wave path can be generated by equations(which is related with specific pattern).

Oscillation pattern may be generated according to equation (2).

$$y = \left(\frac{WD}{2}\right) * \cos(\frac{2\pi}{CD} x) \tag{2}$$

A polishing path according to a second embodiment of present invention may be generated by changing the first polishing path component in the third embodiment from rectilinear to sinusoidal pattern. Figure 7 shows the polishing path according to the fourth embodiment of present invention.

The skilled person should understand that the polishing path may be a combination of any two, three or four of those according to the first, second, third and fourth embodiments. Though the present invention has been described on the basis of some preferred embodiments, those skilled in the art should appreciate that those embodiments should by no way limit the scope of the present invention. Any variations and modifications to the embodiments should be within the apprehension of those with ordinary knowledge and skills in the art, and therefore fall in the scope of the present invention which is defined by the accompanied claims.

**Claims**

1. A method of polishing a work piece (10) with a tool (20), including:

   effecting a relative movement between polishing area of the tool (20) and the work piece (10) with engaging the polishing area of the tool (20) with a portion of the work piece (10) surface so as to form the polishing path (30) on the work piece (10) surface;
   wherein:
   the relative movement includes:

   a first relative movement component (31) wherein the first relative movement component (31) is in rectilinear or sinusoidal pattern; and
   a second relative movement component, oscillating the polishing area of the tool (20) and the work piece (10) toward and away from each other about the first relative movement component (31) in a first and second opposite directions substantially normal to a direction of the first relative movement component (31);

   wherein:
   a polishing mark formed by the engagement of the polishing area of the tool (20) and the work piece (10) during the oscillation in the first direction (32) is polished by their engagement in the oscillation in the second direction (33), the first direction (32) and the second direction (33) are opposite to each other.

2. The method according to claim 1, where the steps of effecting first relative movement component (31) and production of oscillation further includes:
   maintaining the tool (20) or the work piece (10) during said steps.

3. The method according to any of the preceding claims, wherein:
   the polishing path (30, 41) is in a saw-tooth or sinusoidal pattern.

4. The method according to claim 3, wherein:
   for the oscillation in one of cycles, the polishing region on the work piece (10) surface where the engagement occurs at start of the oscillation in the first direction intersects that where the engagement occurs at end of the oscillation in the second direction.

5. The method according to claim 3 or 4, wherein:

the polishing area of the tool (20) rotates around an axis substantially normal to the work piece (10) surface.

6. A system (2) for polishing a work piece (10), including:

   a tool (20) with a polishing area;
   a controller (21); and
   a manipulator (22) holding the tool (20);
   wherein:
   under the control of the controller (21), the manipulator (22) is operable to carry out the method according to any of the claims 1 to 5.

7. The system according to claim 6, wherein:
   the tool (20) or the work piece during is maintained.

**Patentansprüche**

1. Verfahren zum Polieren eines Werkstücks (10) mit einem Werkzeug (20), umfassend:

   Bewirken einer Relativbewegung zwischen dem Polierbereich des Werkzeugs (20) und dem Werkstück (10), wobei der Polierbereich des Werkzeugs (20) mit einem Teil der Oberfläche des Werkstücks (10) in Eingriff gebracht wird, um die Polierbahn (30) auf der Oberfläche des Werkstücks (10) zu bilden;
   wobei:
   die Relativbewegung umfasst:

      eine erste Relativbewegungskomponente (31), wobei die erste Relativbewegungskomponente (31) ein geradliniges oder sinusförmiges Muster aufweist; und
      eine zweite Relativbewegungskomponente, die den Polierbereich des Werkzeugs (20) und das Werkstück (10) um die erste Relativbewegungskomponente (31) in einer ersten und einer zweiten entgegengesetzten Richtung, die im Wesentlichen senkrecht zu einer Richtung der ersten Relativbewegungskomponente (31) sind, aufeinander zu und voneinander weg schwingt;

   wobei:
   eine Poliermarke, die durch den Eingriff des Polierbereichs des Werkzeugs (20) und des Werkstücks (10) während der Oszillation in der ersten Richtung (32) gebildet wird, durch ihren Eingriff bei der Oszillation in der zweiten Richtung (33) poliert wird, wobei die erste Richtung (32) und die zweite Richtung (33) einander entgegengesetzt sind.

2. Verfahren nach Anspruch 1, wobei die Schritte des Bewirkens der ersten Relativbewegungskomponente (31) und des Erzeugens der Oszillation ferner umfassen:
   Warten des Werkzeugs (20) oder des Werkstücks (10) während dieser Schritte.

3. Verfahren nach einem der vorhergehenden Ansprüche, wobei:
   die Polierbahn (30, 41) sägezahnförmig oder sinusförmig ist.

4. Verfahren nach Anspruch 3, wobei:
   bei der Oszillation in einem der Zyklen der Polierbereich auf der Oberfläche des Werkstücks (10), in dem der Eingriff zu Beginn der Oszillation in der ersten Richtung auftritt, sich mit denjenigen schneidet, in dem der Eingriff am Ende der Oszillation in der zweiten Richtung auftritt.

5. Verfahren nach Anspruch 3 oder 4, wobei:
   der Polierbereich des Werkzeugs (20) um eine Achse rotiert, die im Wesentlichen senkrecht zur Oberfläche des Werkstücks (10) steht.

6. System (2) zum Polieren eines Werkstücks (10), umfassend:

   ein Werkzeug (20) mit einer Polierfläche;
   eine Steuerung (21); und

einen Manipulator (22), der das Werkzeug (20) hält;

wobei:

der Manipulator (22) unter der Kontrolle der Steuerung (21) betreibbar ist, um das Verfahren nach einem der Ansprüche 1 bis 5 auszuführen.

**7.** System nach Anspruch 6, wobei:

das Werkzeug (20) oder das Werkstück währenddessen gewartet wird.

## Revendications

**1.** Procédé de polissage d'une pièce (10) avec un outil (20), incluant :

le fait d'effectuer un mouvement relatif entre une zone de polissage de l'outil (20) et la pièce (10) avec une mise en prise de la zone de polissage de l'outil (20) avec une partie de la surface de la pièce (10) de façon à former le trajet de polissage (30) sur la surface de la pièce (10) ;

dans lequel :

le mouvement relatif inclut :

un premier élément de mouvement relatif (31) dans lequel le premier élément de mouvement relatif (31) suit un motif rectiligne ou sinusoïdal ; et

un second élément de mouvement relatif, faisant osciller la zone de polissage de l'outil (20) et la pièce (10) en direction et à l'écart l'un de l'autre autour du premier élément de mouvement relatif (31) dans une première et une seconde direction opposées sensiblement perpendiculaires à une direction du premier élément de mouvement relatif (31) ;

dans lequel :

une marque de polissage formée par la mise en prise de la zone de polissage de l'outil (20) et de la pièce (10) pendant l'oscillation dans la première direction (32) est polie par leur mise en prise dans l'oscillation dans la seconde direction (33), la première direction (32) et la seconde direction (33) sont opposées l'une à l'autre.

**2.** Procédé selon la revendication 1, où les étapes consistant à effectuer le premier élément de mouvement relatif (31) et à produire une oscillation incluent en outre :

le maintien de l'outil (20) ou de la pièce (10) pendant lesdites étapes.

**3.** Procédé selon l'une quelconque des revendications précédentes, dans lequel :

le trajet de polissage (30, 41) suit un motif en dents de scie ou sinusoïdal.

**4.** Procédé selon la revendication 3, dans lequel :

pour l'oscillation dans l'un de cycles, la région de polissage sur la surface de la pièce (10) où la mise en prise se produit au début de l'oscillation dans la première direction croise celle où la mise en prise se produit à la fin de l'oscillation dans la seconde direction.

**5.** Procédé selon la revendication 3 ou 4, dans lequel :

la zone de polissage de l'outil (20) tourne autour d'un axe sensiblement perpendiculaire à la surface de la pièce (10).

**6.** Système (2) pour polir une pièce (10), incluant :

un outil (20) avec une zone de polissage ;

un dispositif de commande (21) ; et

un manipulateur (22) tenant l'outil (20) ;

dans lequel :

sous la commande du dispositif de commande (21), le manipulateur (22) peut être utilisé pour réaliser le procédé selon l'une quelconque des revendications 1 à 5.

**7.** Système selon la revendication 6, dans lequel :

l'outil (20) ou la pièce pendant est maintenu.

Figure 1A

Polishing marks formed in the previous polishing

Polishing region in the current polishing

Figure 1B

Figure 2

Figure 3

Figure 4

Figure 5

Figure 6

Figure 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015151325 A1